# EUROPEAN PATENT SPECIFICATION

(11) **EP 3 939 365 B1**
(45) Date of publication and mention of the grant of the patent: **31.12.2025**
(21) Application number: 19718477.3
(22) Date of filing: 15.03.2019
(51) Int. Cl.: H04W 72/27, H04L 5/00

(54) **UNIFIED INTER-CELL INTERFERENCE COORDINATION**
VEREINHEITLICHTE INTERFERENZKOORDINIERUNG ZWISCHEN ZELLEN
COORDINATION D'INTERFÉRENCE INTERCELLULAIRE UNIFIÉE

(43) Date of publication of application: 19.01.2022
(73) Proprietor: Nokia Solutions and Networks Oy, 02610 Espoo (FI)
(72) Inventor: PANTELIDOU, Anna, 91300 Massy (FR); PEDERSEN, Klaus, 9000 Aalborg (DK); UZEDA GARCIA, Luis Guilherme, 91300 Massy (FR)
(74) Representative: Nokia EPO representatives
(86) International application number: PCT/US2019/022521
(87) International publication number: WO 2020/190263

(56) References cited:
- WO-A1-2018/202956
- US-A1- 2016 359 597
- SONY: "Considerations on Downlink based Positioning in NR", vol. RAN WG1, no. Taipei, Taiwan; 20190121 - 20190125, 20 January 2019 (2019-01-20), XP051593298, Retrieved from the Internet <URL:http://www.3gpp.org/ftp/Meetings%5F3GPP%5FSYNC/RAN1/Docs/R1%2D1900384%2Ezip> [retrieved on 20190120]

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to a method and an apparatus for unified inter-cell interference coordination (ICIC) for 5G NR.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR provides bitrates on the order of 10-20 Gbit/s or higher, and can support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.
Further prior art documents are US 2016/359597 A1 showing a method and apparatus for inter-cell interference coordination in a wireless communication system, WO 2018/202956 A1 showing enabling exchange of information on radio frame configuration in neighbor cells and SONY: "Considerations on Downlink based Positioning in NR", vol. RAN WG1 no. Taipei, Taiwan; 20190121 - 20190125 20 January 2019 (2019-01-20).

### SUMMARY:

Embodiments are directed to a method and an apparatus as defined by the respective claims.

### BRIEF DESCRIPTION OF THE DRAWINGS:

For proper understanding of example embodiments, reference should be made to the accompanying drawings, wherein:
Fig. 1 illustrates an example of a high-level NR beam measurement model, according to one example;
Fig. 2 illustrates an example of the revised 5G NR network architecture, according to one example;
Fig. 3 illustrates an example high interference indication (HII) information element, according to one example;
Fig. 4A illustrates an example of a relative narrowband Tx Power (RNTP) information element, according to one example;
Fig. 4B illustrates the continuation of the example of the relative narrowband Tx Power (RNTP) information element, according to one example;
Fig. 5 illustrates an example of an overload indication (OI) information element, according to one example;
Fig. 6A illustrates an example of an almost blank subframe information (ABS) information element, according to one example;
Fig. 6B illustrates the continuation of the example of the almost blank subframe information (ABS) information element, according to one example;
Fig. 7 illustrates an example of an almost blank subframe status (ABS status) information element, according to one example;
Fig. 8 illustrates an example of a coordinated multipoint (eCoMP) information element, according to one example;
Fig. 9 illustrates an example framework of the components of some example embodiments;
Fig. 10 illustrates a Heterogeneous Network (HetNet) example of new interference scenarios in NR, according to an embodiment;
Fig. 11a illustrates an example three-dimensional (3-D) inter-cell interference coordination (ICIC) matrix representation for numerology 0, according to an embodiment;
Fig. 11b illustrates an example 3-D ICIC matrix representation for numerology 1, according to an embodiment;
Fig. 12 illustrates an example signaling diagram, according to an embodiment;
Fig. 13 illustrates an example signaling diagram, according to an embodiment;
Fig. 14 illustrates an example signaling diagram, according to an embodiment;
Fig. 15 illustrates an example signaling diagram, according to an embodiment;
Fig. 16 illustrates an example signaling diagram, according to an embodiment;
Fig. 17 illustrates an example signaling diagram, according to an embodiment;
Fig. 18 illustrates an example signaling diagram, according to an embodiment;
Fig. 19 illustrates an example of an enhanced beam-based almost blank subframe (BABS) information, according to an embodiment;
Fig. 20 illustrates an example of an enhanced beam-based almost blank subframe (BABS) information, according to an embodiment;
Fig. 21 illustrates an example signaling diagram, according to an embodiment;
Fig. 22 illustrates an example flow diagram of a method, according to an embodiment; and
Fig. 23 illustrates an example block diagram of an apparatus, according to an embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for unified inter-cell interference coordination (ICIC) for 5G NR, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or steps discussed below may be performed in a different order and/or concurrently with each other. Furthermore, if desired, one or more of the described functions or steps may be optional or may be combined. As such, the following description should be considered as merely illustrative of the principles and teachings of certain example embodiments, and not in limitation thereof.

It is noted that some embodiments are described below as being performed by or in a gNB. However, reference to a gNB or the performance of some embodiments using a gNB is just one example and embodiments should not be considered as being limited to just this example. As another, non-limiting example, certain embodiments may also be applied in other network nodes, such as a base station, access node, access point, node B, eNB, or the like.

The LTE specifications include a rich set of inter-cell interference coordination (ICIC) mechanisms, for example as captured in the X2 specifications (e.g., 3GPP TS 36.423). In short, these ICIC mechanisms may include basic frequency-domain and power-domain ICIC mechanisms, such as Overload Indicator (OI), Relative Narrowband Transmit Power (RNTP), and High Interference Indicator (HII). In addition, another ICIC mechanism is basic time-domain ICIC, such as further enhanced ICIC (feICIC), which includes X2 signaling of Invoke, Almost Blank Subframe (ABS) information and status. It is noted that feICIC (and eICIC) operate on time-resolution of 1 ms subframes. Other ICIC mechanism include Enhanced Coordinated Multiple Point (eCoMP) coordination, where time-frequency coordinated muting is facilitated via X2 exchange of muting hypotheses and corresponding benefit metrics. eCoMP may operate on time-resolution of 1 ms subframes and physical resource blocks (PRBs) in the frequency domain.

Meanwhile, the 5G NR frame structure is designed to be highly flexible. A radio frame lasts 10 ms and includes a series of 1 ms subframes. Each frame is divided into two equally sized half-frames of five subframes, each with half-frame 0 comprised of subframes 0 - 4 and half-frame 1 comprised of subframes 5 - 9. A slot may include 14 OFDM symbols for cases with normal cyclic prefix, while it may include 12 OFDM symbols for the case with extended cyclic prefix and subcarrier spacing of 60 kHz. The number of slots per subframe / radio frame may depend on the subcarrier spacing. For 15 kHz, there is one slot per subframe, for 30 kHz there are two slots per subframe, for 60 kHz there are four slots per subframe, and so forth.

A larger number of possible slot formats are defined in 3GPP TS 38.213, as shown in Table 1 below, where "D" indicates downlink symbol, "U" indicates uplink symbol, and "F" is flexible. Hence, "F" could refer to muting or be used for downlink or uplink transmission. As one example, slot format 0 and 1 corresponds to downlink-only and uplink-only slots, respectively. Slot format 36 contains first three downlink transmission symbols, followed by "F" (which could be set to mute for guard period), and then ten uplink transmissions.

**TABLE 1**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE determines the slot format for the slot based on *TDD-UL-DL-ConfigurationCommon,* or *TDD-UL-DL-ConfigDedicated* and, if any, on detected DCI formats | | | | | | | | | | | | | |

It may be assumed that, for each cell, parameterization of the subcarrier spacing, cyclic prefix length (normal or extended), carrier frequency, carrier bandwidth are "static" settings that are seldomly adjusted. It may, therefore, also be assumed that a gNB can signal settings of the aforementioned parameters as part of the XnAP (e.g., see 3GPP TS 38.423).

A network carrier may contain multiplexing of different physical layer numerologies. One such example is: 106 PRBs for 15 kHz subcarrier spacing (SCS) with minimum guard band 452.5 kHz, 51 PRBs for 30 kHz SCS with minimum guard band 805 kHz and 24 PRBs for 60 kHz SCS with minimum guard band 1210 kHz are allocated in 20 MHz channel bandwidth. It is noted that 3GPP TS 38.101 includes Tables with supported carrier BWs and number of PRBs per numerology and bandwidth (BW) for frequency ranges 1 and 2.

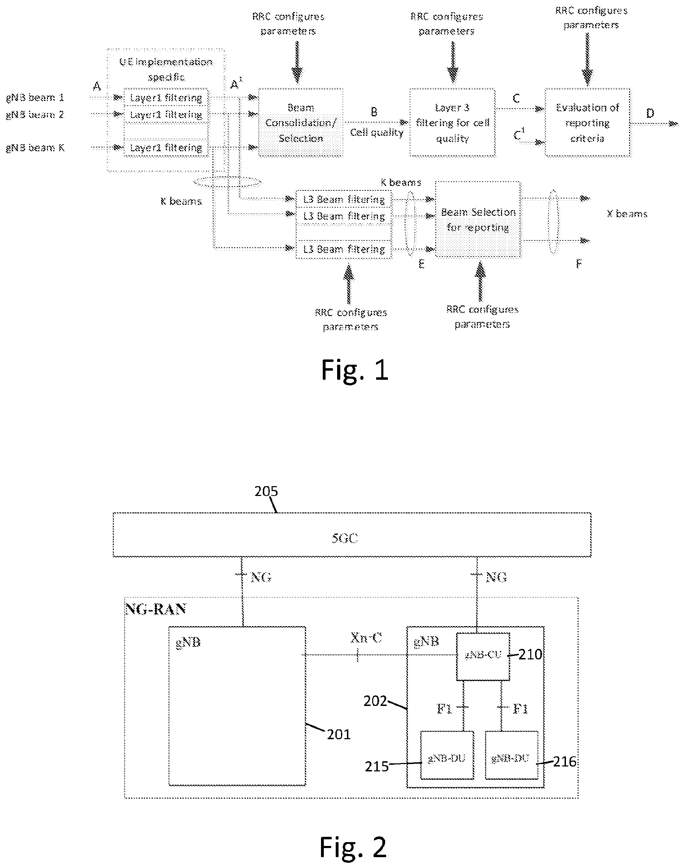

NR supports beamforming for all channels. The behaviour of the beam selection is standardized, and the configuration of this module may be provided by RRC signalling. In RRC_CONNECTED, the UE may measure multiple beams (at least one) of a cell and the measurement results (power values) may be averaged to derive the cell quality. UEs can be configured to consider a subset of the detected beams. Cell quality from beam measurements may be derived in the same way for the serving cell(s) and for the non-serving cell(s). Measurement reports may contain the measurement results of the *X* best beams if the UE is configured to do so by the gNB. Fig. 1 illustrates an example of the corresponding high-level NR beam measurement model.

Fig. 2 illustrates an example of the revised 5G NR network architecture, as specified in: "3GPP technical specification 38.401, "Technical Specification Group Radio Access Network; NG-RAN; Architecture description", Version 15.1.0, Release 15, March 2018." Among others, the 5G NR architecture depicted in Fig. 2 includes an Xn-C interface between the gNBs 201, 202 to coordinate by means the XnAP procedures as defined in 3GPP TS 38.423, as well as an NG interface towards the 5G core network (5GC) 205. The 5G NR architecture also allows C-RAN implementations with one or multiple centralized units (CUs) 210, each serving a large number of distributed units (DUs) 215, 216. Such CU-DU options are made possible by the introduction of the two new interfaces named E1 (between the control and user plane in the CU) and F1 (between the CU and DU). These interfaces are specified in 3GPP TS 38.460 (E1 Stage 2), TS 38.463 (E1 Stage 3), TS 38.470 (F1 Stage 2), and TS 38.473 (F1 Stage 3).

It may left up to the network vendor or operator to decide on which of the available architecture options to implement and deploy. For example, in locations with availability of fiber connections, one CU may be set to serve a large number of DUs with F1 latencies of just 5-10 micro seconds.

Co-channel inter-cell interference limits the performance of cellular systems. However, there are no standardized ICIC mechanisms for NR at the moment. Example embodiments are able to solve the lack of ICIC mechanisms for NR.

One solution is the adaptation of existing LTE ICIC X2 procedures to the newly defined Xn-C interface. However, the LTE ICIC features are designed for distributed network architectures, assuming a rather simple frame structure with a single unique physical layer numerology for all cells and do not take into account the flexibilities provided by NR systems in terms of a more dynamic and powerful spatial domain, usage of user-specific bandwidth parts (BWPs) and scalable numerologies which allow extensions towards finer ICIC resolutions on slot and mini-slot granularities. Furthermore, this approach ignores the new possibilities introduced by the new F1 interface and is not capable of handling the much more varied and dynamic interference conditions that may arise in NR networks. Such variability arises, for example, from the different numerologies, the richer spatial (beamforming, precoding and interference rejection) capabilities discussed above, flexible and independent downlink/uplink transitions leading to cross-link interference (CLI) and the new traffic profiles that 5G is expected to support, such as mMTC and URLLC.

Moreover, since the set of ICIC mechanisms evolved over time and were gradually enriched from 3GPP Release 8 onwards (ICIC, eICIC, feICIC, eCoMP), the time and frequency domain components of interference management do not share a common signalling framework. As a result, there is a need for new non-trivial innovations in order to have a solid ICIC framework defined for NR.

Therefore, certain embodiments may address the harmonization of these differences to enable effective ICIC mechanisms for NR networks. For example, some embodiments may address one or more of a series of correlated sub-problems, such as but not limited to how to coordinate interference between neighboring cells that use different numerologies, how to extend existing ICIC (including eICIC and eCoMP) schemes to make them spatially aware, how to account for UE-specific bandwidth parts, how to go beyond binary (on/off) muting patterns, how to merge traditional and cross-link interference into one framework, how to facilitate ICIC interoperability between F1 and Xn-C interfaces, and/or how to unify under a cohesive framework multiple ICIC mechanisms, e.g., OI, HII, RNTP.

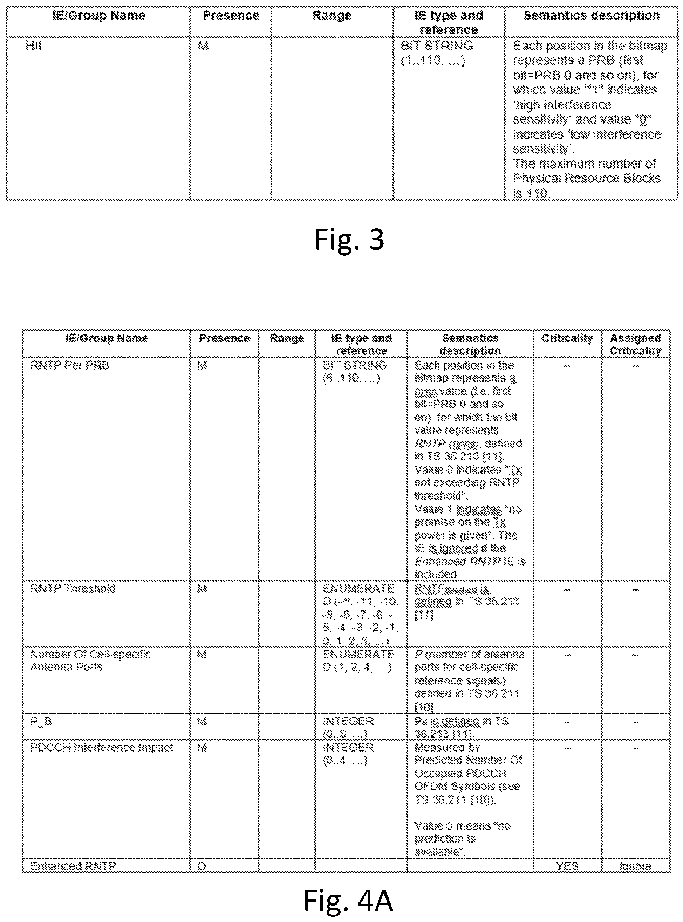

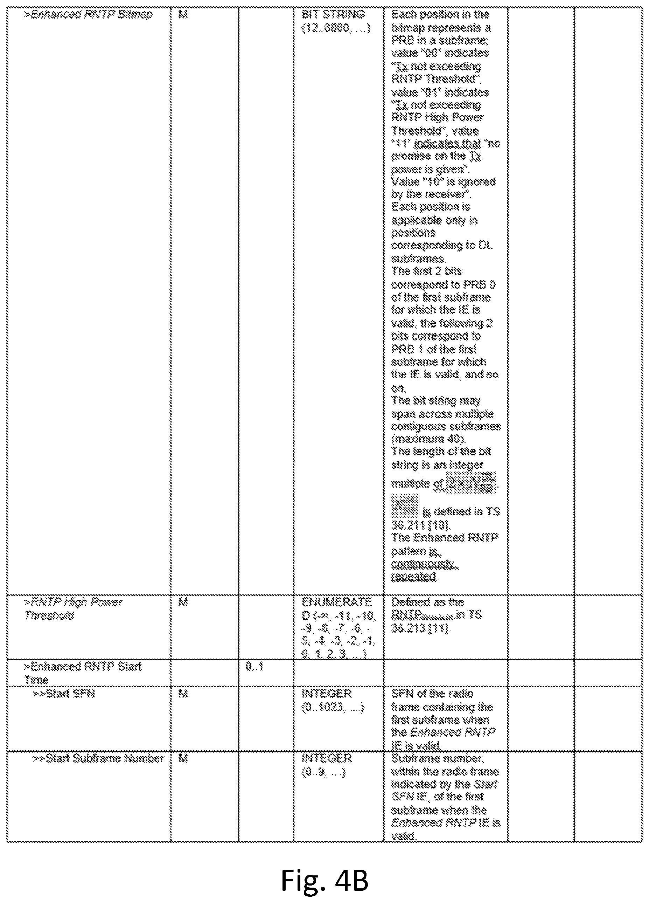

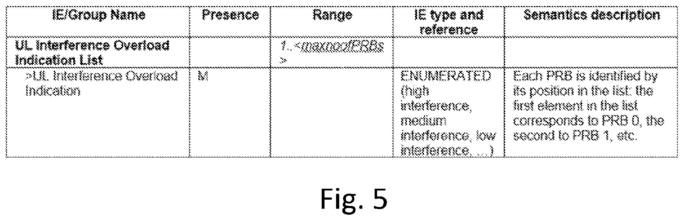

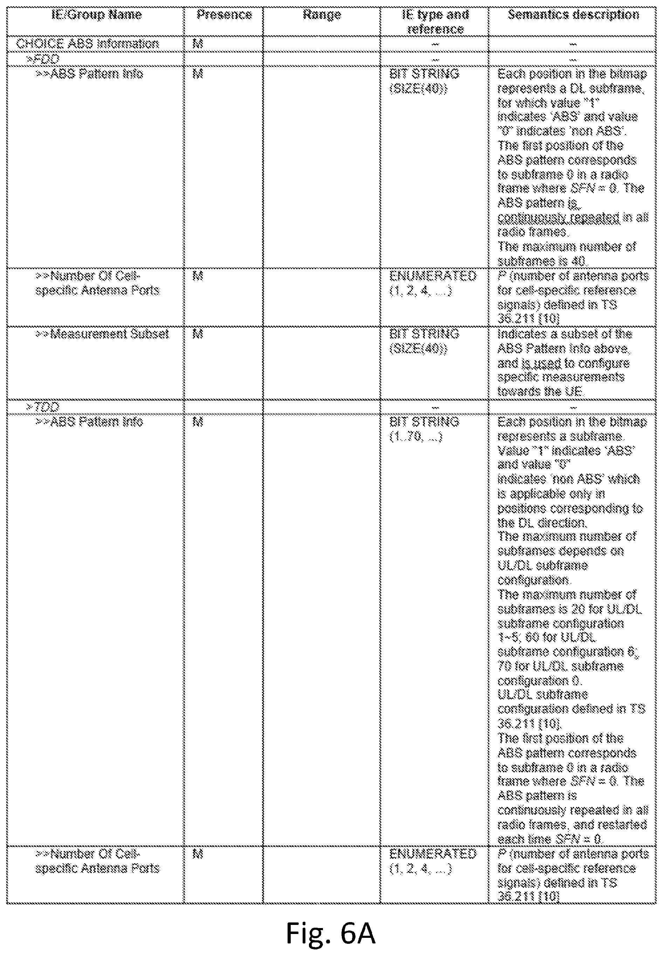

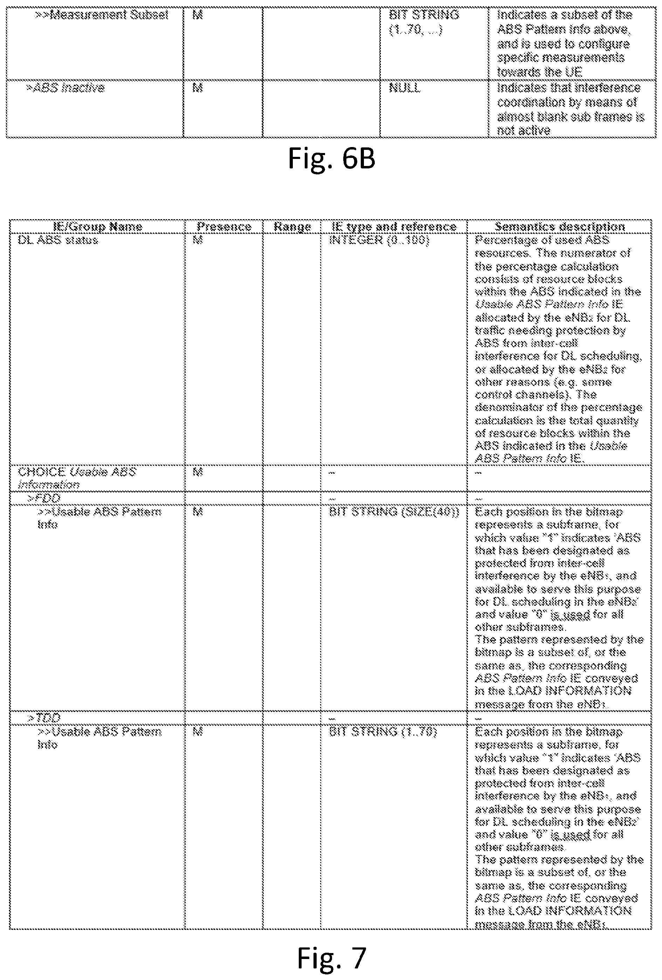

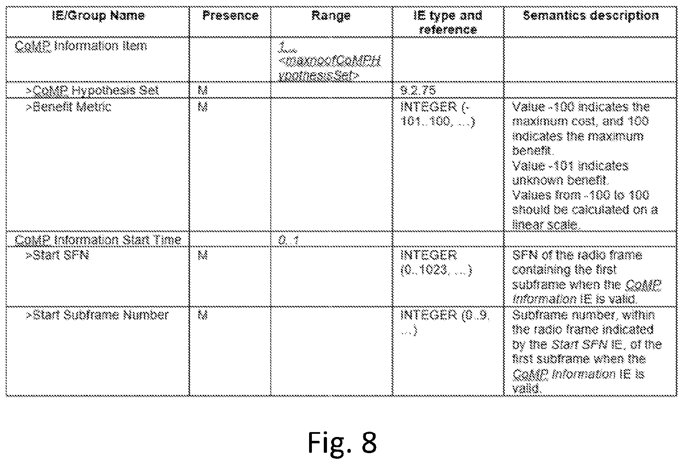

Some examples of messages including one or more IE(s) that may be exchanged over the X2 interface for the purpose of ICIC, as specified in "3GPPP 36.423: Evolved Universal Terrestrial Radio Access Network (E-UTRAN); X2 Application Protocol (X2AP)", include high interference indication (HII) IE, relative narrowband Tx power (RNTP) IE, overload indication (OI) IE, almost blank subframe information (ABS) IE, almost blank subframe status (ABS status) IE, and/or coordinated multipoint (eCoMP) IE. An example of the HII IE is depicted in Fig. 3, an example of the RNTP IE is depicted in Figs. 4A and 4B, an example of the OI IE is depicted in Fig. 5, an example of the ABS IE is depicted in Figs. 6A and 6B, an example of the ABS status IE is depicted in Fig. 7, and an example of the eCoMP IE is depicted in Fig. 8.

Certain embodiments may be configured to make use of NR design elements, such as beam-centric design and the aligned resource block boundaries across difference numerologies to propose a unified non-binary radio resource muting coordination scheme. It is noted that, in an embodiment, the term "muting" may be understood to highlight that some embodiments may not include a centralized scheduler.

Due to the very flexible transmission structure introduced by NR, the radio resources may be considered to be muted (binary on/off) or transmitted with reduced power as facets of a hypercube that can be represented as elements of a N-dimensional matrix. Projections of the N-matrix to a lower dimension, such as a 2-D vector, may contain implicit information about the numerology used by neighbouring cells. Certain embodiments may map these projections into one or more IEs carried by messages that could be the subject of standardization. The messages may be exchanged over the new NR interfaces, such as the Xn and/or F1 interfaces, to form the basis of an ICIC scheme according to an embodiment.

As one non-limiting example, using the 1ms subframe as a common reference, a 2x1x1 matrix may denote a muting pattern signalled by (or to) a gNB using a subcarrier spacing of 60KHz - 2 slots per subframe - covering all frequency domain resource blocks and all transmit beam indexes. Each of the two entries may be Boolean (on/off) or integer-valued (reduced transmission power).

In an embodiment, an extra dimension can be introduced to distinguish between side-links (PC5), uplink (UL) and downlink (DL) directions, thus treating each link as a special instance of the general problem. For example, these pieces of information may allow neighbouring cells to distinguish between reference signal received power (RSRP)/reference signal received quality (RSRQ) measurements carried out in the presence of cross-link interference (CLI) and those not affected by CLI. By treating the links as dimensions of the hypercube, dedicated schemes for each direction, namely for UL, DL, PC5, etc. can be avoided.

Further, an embodiment may utilize the new CU-DU architecture as a powerful tool that addresses one of the problems plaguing the original standardized LTE ICIC schemes, namely, that there was no explicit signalling between eNBs to communicate the response to the ICIC messages. According to one embodiment, this can be solved by means of an explicit handshake between each CU and the DU(s) under the CU. Moreover, in an embodiment, CUs may exchange messages among themselves via Xn and can act as proxies for the DUs. One extra functionality brought about by the CU-DU architecture is the possibility that a CU piggybacks information about pertinent neighbouring DUs during the aforementioned handshake that can be exploited by the independent scheduler in each DU. For the CU-DU architecture, in an embodiment, the CU may be the master of the ICIC actions as it has global knowledge of the radio conditions experienced by all the cells under the DUs belonging to the CU. Among others, the global knowledge at the CU may come from the fact that all UEs radio resource measurements (RRM) are terminated at the RRC in the CU. Moreover, some embodiments may provide new message exchanges between CU and DUs that further strengthen the CU's global interference knowledge, and thereby its decision capability to report (or even dictate) ICIC settings for the DUs.

Further, due to the very wide carrier bandwidth supported by NR (e.g., up to 400 MHz in Release 15), the concept of receiver-side bandwidth adaptation has been introduced, namely bandwidth part (BWP) in NR parlance. One embodiment may be configured to utilize (DL/UL) BWPs as the basis for coarse-grained frequency domain ICIC mechanism that is aware of UE- specific conditions.

Thus, according to example embodiments, the radio resources may be muted (binary on/off) or transmitted with reduced power as facets of a hypercube that can be represented as elements of a N-dimensional matrix. In an embodiment, projections of the N-matrix to a lower dimension, such as a two-dimensional vector, may contain implicit information about the numerology used by neighbouring cells. This includes beam-space dimension. An embodiment may map these projections into IEs that may be carried by ICIC messages. In one embodiment, the ICIC messages may be exchanged over the Xn and/or F1 interfaces.

According to certain embodiments, an explicit handshake may be performed between a CU and its DU(s). In one embodiment, CUs may exchange messages among themselves via Xn and may act as proxies for the DUs. According to certain embodiments, information about pertinent neighbouring DUs may be piggybacked during the aforementioned handshake, where that information may be exploited by the independent scheduler in each DU. Thus, example embodiments provide new message exchanges between CU and DUs that further strengthen the CUs global interference knowledge, and thereby its decision capability to report and/or dictate optimal ICIC settings for the DUs.

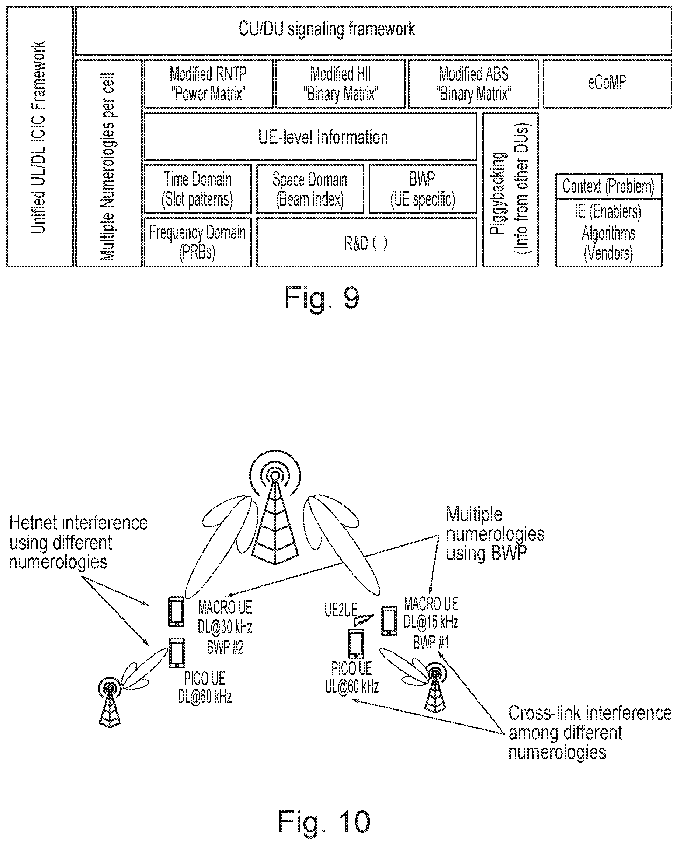

According to an embodiment, BWPs may be utilized as the basis for coarse-grained frequency domain ICIC mechanism that is aware of UE- specific conditions. Fig. 9 illustrates an example framework of the components of some example embodiments.

As described above, certain embodiments provide a framework to handle the different interference scenarios not seen in legacy LTE networks. Fig. 10 illustrates a Heterogeneous Network (HetNet) example of new interference scenarios in NR, which highlights the importance of taking the new PHY numerologies and the spatial domain into account. In the following, a series of example implementations including the fully distributed alternatives (i.e., based on Xn-C signalling) and the new high-layer functional split case for ICIC signalling over the novel F1 interface connecting CU and DUs will be discussed.

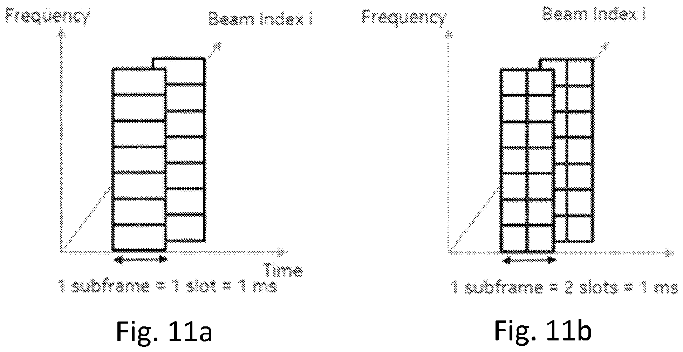

As introduced above, certain embodiments provide a unified framework for time/frequency/space domain ICIC signalling in the UL and DL. In one embodiment, ICIC messages are defined to be three-dimensional (3-D) matrices, with one dimension signifying the frequency, a second dimension signifying the time, and the third dimension signifying the beam information. Thus, an embodiment introduces beam index information as a third dimension in the ICIC messages. Further, an embodiment may consider time granularities of the order of a time slot. For example, when numerology 0 is used then the time-slot duration is equal to subframe (1 ms), which corresponds to the existing ICIC time granularity. For different numerologies (1,2,3,..), the slot-duration may change (e.g., becomes 0.5ms, 0.25 ms, 0.125 ms, etc.), which enables ICIC control of multiple, finer granularities in the ICIC techniques according to certain embodiments. Thus, for each numerology, there may be a different 3-D matrix (when frequency and beam indexes are fixed) in the dimension corresponding to time. Knowing the dimension corresponding to time provides implicit information on the used numerology. Fig. 11a illustrates an example 3-D ICIC matrix representation for numerology 0, and Fig. 11b illustrates an example 3-D ICIC matrix representation for numerology 1.

As introduced above, certain embodiments may provide one or more ICIC messages that may include, for example, beam-based UL high interference indication (BHII), beam-based relative narrowband Tx power (BRNTP), enhanced beam-based overload indication (BOI), enhanced beam-based ABS information (BABS), enhanced ABS status (eABS) status, and/or enhanced beam-based coordinated multipoint (eBCoMP).

In an embodiment, BHII is a 3D matrix whose dimensions may indicate frequency, time (slot-based granularity) and beam index information. The dimension of the matrix may depend on the numerology used. Each entry of the matrix (corresponding to a PRB, time slot, and beam index) may take binary values. For example, a value 1 signifies that high interference will be created in the uplink at a given PRB, time (slot) and beam index and a value 0 the absence of high interference. The dimension of BHII corresponding to time may be adjusted to reflect the number of slots in a subframe (e.g., 1, 2, 4, 8, 16). Thus, the dimension of BHII may provide implicit information on the used numerology. Beam index information may also be alternatively indicated with an index that identifies a set/sector of beams rather than a single beam. For time division duplex (TDD) cases, BHII can be accompanied with time-domain (timing) information on when a cell will transmit in the UL. This feature may enable neighbouring cells to perform measurements of interference when, e.g., neighbouring cells transmit in the UL. This feature can further enable neighbouring cells to better coordinate their transmissions in time. According to certain embodiments, BHII may be sent between two gNBs, between two CUs, or between a CU and a DU in both directions.

In an embodiment, BRNTP is a 3D matrix whose dimensions may indicate frequency, time (slot-based granularity) and beam index information. The dimension of the matrix may depend on the numerology used. Each entry of the matrix (corresponding to a PRB, time slot, and beam index) can either take binary values or alternatively, and differently from existing schemes, it can take quantized Tx information in a sense that a bit in the matrix can indicate the expected values the matrix can take. In the binary form, a value 1 may signify that a gNB will transmit at high power in the downlink (exceeding a given threshold) and a value 0 may signify that it will not transmit at a high power. In the quantized version, different quantized Tx values may indicate the transmission power of the DU(gNB) at a given frequency, time (slot) and beam index. The dimension of BRNTP corresponding to time may be adjusted to reflect the number of slots in a subframe (e.g., 1, 2, 4, 8, 16). Thus, the dimension of BRNTP may provide implicit information on the used numerology. Beam index information may also be alternatively indicated with an index that identifies a set/sector of beams rather than a single beam. For TDD cases, BRNTP can be accompanied with time-domain (timing) information on when a cell will transmit in the DL. This feature can enable neighbouring cells to perform measurements of interference when, e.g., neighbouring cells transmit in the DL. This feature may further enable neighbouring cells to better coordinate their transmissions in time. According to certain embodiments, BRNTP may be sent between two gNBs, between two CUs, or between a CU and DU in both directions.

In an embodiment, unlike the BHII and BRNTP, BOI may have two dimensions that refer to beam index information and a PRB on which the interference measurements take place. It is two-dimensional since the time dimension is not included in BOI. Interference measurement on a PRB may be given through an average. Thus, BOI can be represented with a 2D matrix (beam index and PRB). Quantizing the interference can be in terms of low, medium, and high values or a finer granularity can be defined for more accurate interference measurements. Beam Index information may be indicated with an index that identifies a set/sector of beams rather than a single beam. According to one embodiment, BOI may be combined with time information regarding when a cell will be performing measurements of interference in the uplink over a certain beam/set of beams. According to certain embodiments, BOI may be sent between two gNBs, between two CUs, or from a DU to a CU.

In an embodiment, BABS may be a time-based ICIC mechanism. Thus, unlike the BHII and BRNTP, BABS has two dimensions that refer to time and to beam-index information. In that respect, BABS may be represented with a 2D matrix whose dimensions indicate a time (slot- or mini-slot-based granularity) and beam information. The dimension of the matrix may depend on the numerology used. Each entry of the matrix may take binary values. For example, a value 1 may mean that the gNB will transmit in the downlink at the given beam index and slot or mini-slot, and a 0 value may mean that a given slot or mini-slot is muted for the specified beam index. Depending on the numerology used, the dimension of BABS corresponding to time may be adjusted to reflect the number of slots in a subframe (e.g., 1, 2, 4, 8, or 16 slots/subframe) in the case of slot-based resolution. Thus, the dimension of BABS can provide implicit information on the used numerology. When mini-slot-based resolution is considered, muting per mini-slot may be possible by specifying the starting symbol and size of the mini-slot within a slot. Beam Index information may also be alternatively indicated with an index that identifies a set/sector of beams rather than a single beam. According to certain embodiments, BABS may be sent between two gNBs or between two CUs, or between a CU and DU. In another embodiment, BABS may be triggered with a special invoke from a DU and the CU may then respond with the piggybacking of BABS information from a set of DUs.

In an embodiment, eABS status may be a 2D matrix whose dimensions indicate time (slot- or mini-slot based granularity) and beam index information. As for the above IEs, the dimension of the matrix may depend on the numerology used. Each entry of the matrix may indicate the percentage of the muted resources, in terms of time and beam, muted by an aggressor gNB 1 that a victim gNB2 is actually using. For each time and beam-index pair it takes a value between 0 and 100. Depending on the numerology used, the dimension of eABS status corresponding to time may be adjusted to reflect the number of slots in a subframe (e.g., 1, 2, 4, 8, or 16 slots/subframe) in the case of slot-based resolution. Thus, implicit information on the used numerology can be extracted based on the size of the matrix. When mini-slot-based resolution is considered, muting per mini-slot may be possible by specifying the start and size of the mini-slot within a slot. Beam Index information may also be alternatively indicated with an index that identifies a set/sector of beams rather than a single beam. According to certain embodiments, eABS may be sent between two gNBs or between two CUs. In another embodiment, a CU may request eABS status from a DU and the DU may respond with its eABS status.

In an embodiment, eBCoMP may be a beam-based coordinated multi-point IE that operates on slot-based or mini-slot based granularity. The CoMP hypothesis may be represented through a 2D matrix whose dimensions indicate time (slot- or mini-slot granularity) and beam information, and its values may correspond to a hypothetical muting at a cell. For example, a value 1 may correspond to muting over the specified time and beam, and a value of 0 may correspond to the absence of muting. The dimension of the matrix that corresponds to time may depend on the numerology used (e.g., it will be adjusted to reflect the number of slots in a subframe (e.g., 1, 2, 4, 8, or 16 slots/subframe) in the case of slot-based resolution). Thus, the time dimension may implicitly signal the numerology used. When mini-slot-based resolution is considered, muting per mini-slot may be possible by specifying the start and size of the mini-slot within a slot. Beam Index information may also be alternatively indicated with an index that identifies a set/sector of beams rather than a single beam. According to certain embodiments, eBCoMP may be sent between two gNBs, between two CUs, or between a CU and DU in both directions.

In certain embodiments, one or more of the IEs described above can be accompanied with an element that coarsely indicates the BWPs that are currently active in a cell in the UL or DL direction. This feature may enable cells to coordinate their active BWPs so that they can operate concurrently orthogonally if the active BWPs in different cells are non-overlapping.

For one or more of the BHII, BRNTP, BABS, eABS Status, and/or eBCoMP, certain embodiments may enable another feature that pertains to the UL/DL BWPs used by the cell on a per beam basis. This feature allows to additionally signal the active BWPs per beam in the UL and DL directions.

According to some embodiments, the ICIC messages can be exchanged through the Xn interface interconnecting, for example, two gNBs (e.g., in a point-to-point communication). Further, in certain embodiments, the ICIC messages can additionally or alternatively be exchanged through the more powerful F1 interface, where ICIC information can be communicated between DUs and the managing CU (point-to-multipoint communication). In one embodiment, a closed-loop ICIC message exchange of the ICIC IEs may be performed over the F1 interface.

For example, according to one embodiment, a CU-DU handshake may be performed over the F1 interface for the purpose of ICIC message exchange. The message exchanges may be logically separated into one or more of the following categories: a) procedures initiated by CU in which CU calculates an ICIC action and signals the DU(s), b) procedures initiated by DU in which DU requests a change in the ICIC decision that CU has indicated, c) procedures initiated by DU in which DU requests information from CU, d) procedures initiated by DU in which DU makes a measurement related to ICIC and reports it to CU, and/or e) a handshake for eBCoMP. Each of these procedures will be discussed in more detail below.

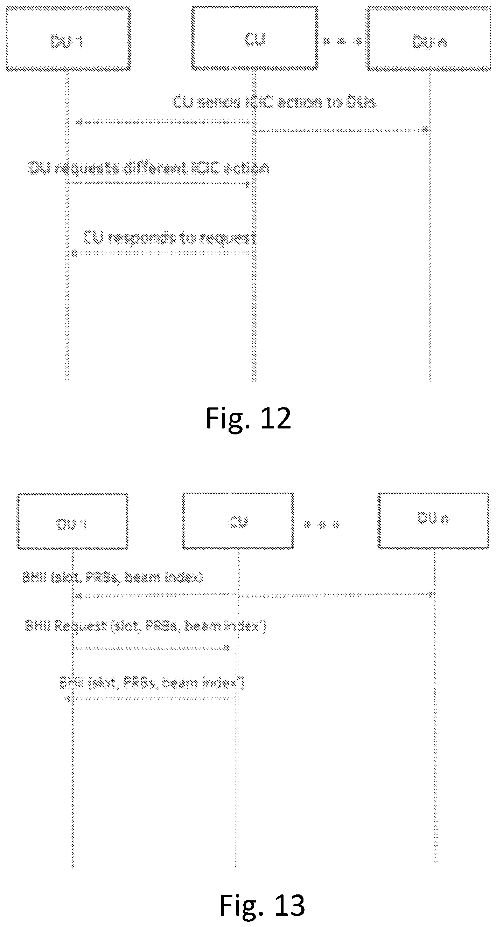

One embodiment may include procedures initiated by CU, where the CU may calculate the best ICIC action for a group of DUs. Fig. 12 illustrates an example signaling diagram depicting this procedure, according to an embodiment. The CU may indicate this decision to DU(s) through the F1 interface. Optionally, one or more DUs can respond to the CU indicating preference for a different action. The CU may respond with a message in which it either grants the request or rejects it. For instance, a CU can reject the request from a DU by resending, in the response to the DU, the same ICIC action originally communicated. In some examples, ICIC messages that could fall in this category may involve BHII, BRNTP, and BABS.

Fig. 13 illustrates an example of a signaling diagram of a handshake procedure for BHII, according to an embodiment. As illustrated in the example of Fig. 13, BHII may be sent by CU to all or a subset of DU(s). BHII may be interpreted by the DU(s) as on which PRBs, slots and beams High Interference users should be prioritized. BHII may also include beam related information regarding the transmission (a beam index or a set of beams or a sector identified by an index). As further illustrated in the example of Fig. 13, DU(s) can indicate to CU their intention to create High Interference through a request. For instance, a DU may indicate a different set of PRBs (or a different beam index as in the example of the figure) on which it wants to create High Interference. Then, the CU may respond to the request from the DU by granting the request and sending a different BHII according to the request (as shown in the example of Fig. 13) or by rejecting the request in which case it can respond with the same BHII vector it previously communicated (to indicate that DU's request is not granted).

It is noted that, in some examples, BHII, BOI, BABS, eABS, eBCoMP and/or BWP UL/DL Information can be an IE inside a LOAD INFORMATION message. It is also noted that DUs may have the same or different numerologies. Since the number of slots per subframe is 2^{µ}, where µ=0,1,2,3,4, is the used numerology, and since CU knows the numerology used by each of the individual DUs, CU can coordinate the BHII messages even among different numerologies.

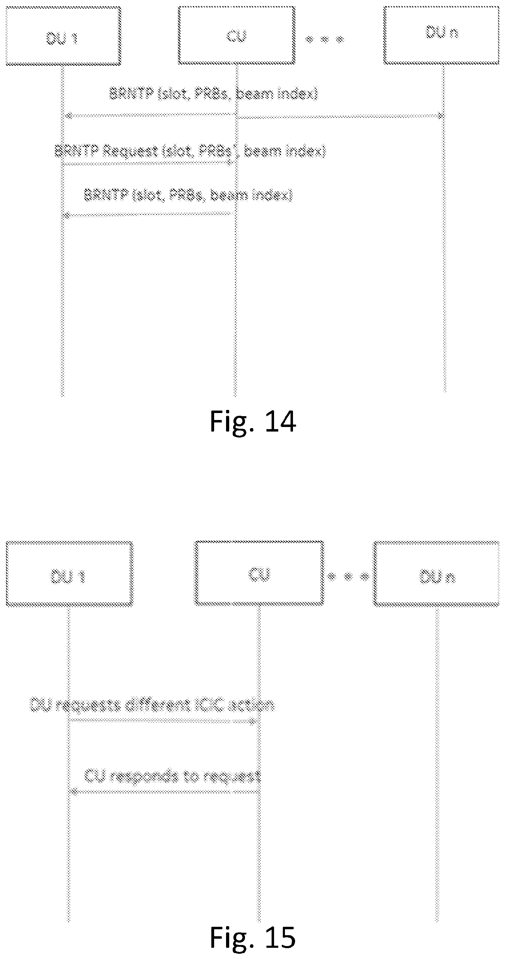

Fig. 14 illustrates an example of a signaling diagram of a handshake procedure for BRNTP, according to an embodiment. As illustrated in the example of Fig. 14, in one embodiment, BRNTP may be sent by CU to all or a subset of DUs in a form of a 3D matrix to indicate frequency, time and beam information. The BRNTP matrix may express power per PRB, slot and beam index. Different BRNTP matrices can be signaled per cell and per DU. A DU receiving a BRNTP may adjust its transmit power setting/scheduling decision according to the instructions coming from the CU. As also illustrated in the example of Fig. 14, a DU may respond to CU with a different BRNTP suggestion (BRNTP Request). For instance, in the example of Fig. 14, DU 1 requests a different power allocation on a set of different PRBs, PRBs'. Then, CU may respond to the BRNTP Request. For example, CU may grant the request and respond with a different BRNTP matrix. Alternatively, as shown in the example of Fig. 14, CU may reject the BRNTP request by resending the same BRNTP matrix originally communicated to the DU.

Fig. 15 illustrates an example of a signaling diagram for procedures initiated by DU(s), according to one embodiment. As illustrated in the example of Fig. 15, one or more DUs can signal the CU and request a different ICIC action, such as a different set of PRBs, from the one indicated by the CU. The CU may respond with a message in which it either grants the request or rejects the request. In some examples, ICIC messages that could fall in this category may involve BHII, BRNTP and BABS.

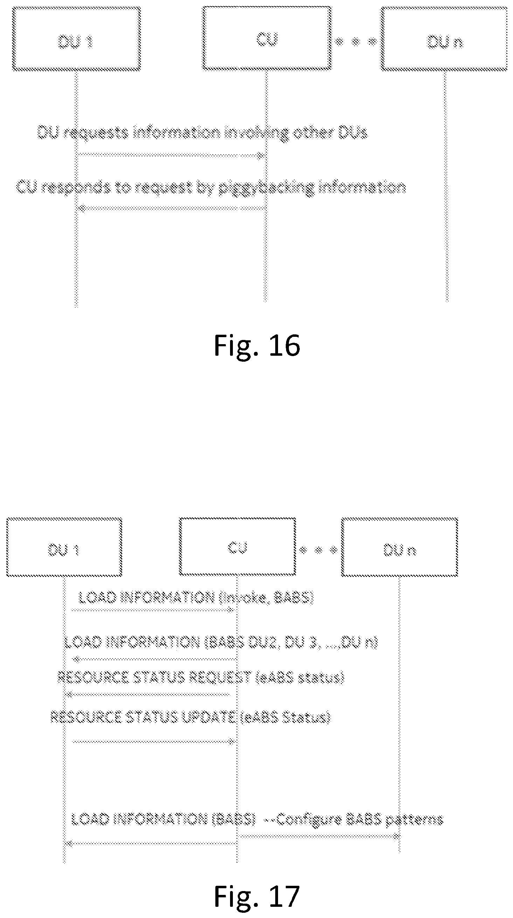

Fig. 16 illustrates another example of a signaling diagram for procedures initiated by DU(s), according to one embodiment. As illustrated in the example of Fig. 16, a DU may request, from CU, information available at the CU. For instance, this information may involve other DUs. The CU may respond with information involving multiple DUs. By sharing information of relevant DUs, the CU helps the independent schedulers in each DU to benefit from information available at the CU. As one non-limiting example, such information may involve information needed for the calculation of eABS status at one DU. This is because, for a DU to compute eABS status, it needs to know the BABS information of other DUs (to know the resources they have muted). Thus, when a DU requests BABS information from a CU the CU may send BABS information from different DUs piggybacked in a single response message. Fig. 17 illustrates an example signaling diagram for piggybacking information involving multiple DUs at the CU, according to one embodiment.

Considering the above, one embodiment introduces a message that may be sent from a DU to the CU, which requests BABS information available at the CU and which involves one or multiple DUs. As illustrated in the example of Fig. 17, some embodiments may introduce a new field in the LOAD INFORMATION message to indicate whether: (1) the invoke message is meant in the traditional sense or (2) whether invoke will include piggybacked information that involves multiple DUs. A field inside a modified Invoke IE can indicate those two options of operation (with and without piggybacking).

Since, in the F1 interface, different DUs may have different numerologies, an embodiment provides a mechanism to enable multi-numerology reporting of BABS information in the LOAD INFORMATION message where the multi-numerology related parameters are piggybacked in the message of the CU to the DUs. It is noted that LOAD INFORMATION can be sent in both directions by both the CU and the DUs under different parametrizations of the message.

In one embodiment, the sender of the LOAD INFORMATION message may be indicated. For example, the gNB-DU ID and gNB-DU name may be indicated in the LOAD INFORMATION message when sent by DU, and gNB-CU ID and gNB-CU name may be indicated when sent by CU. When LOAD INFORMATION is sent by a DU, the used active numerologies by the DU may also be sent in the message. According to an embodiment, the sending DU may also send its point A of its active BWP to enable the rest of the DUs know the reference resource block. When invoke is enabled, DU may request from CU information on certain parameters (e.g., BABS). These parameters may involve information available at the CU about one or more DUs. In an embodiment, when more than one DU is involved, the CU may piggyback this information from multiple DUs and send it to the requesting DU.

According to some embodiments, a requesting DU may indicate in a field, such as in the invoke IE, from which DUs it is requesting information. Those DUs may be grouped according to certain characteristics. For instance, 2 bits can be used to indicate a group of: (a) DUs having a common numerology µ=0,1,2,3,4 (E.g., bits 00), (b) DUs that are in proximity and thus interfere more with the DU (E.g., bits 01), (c) all DUs under the CU (E.g., bits 10), and/or (d) DUs identified by the CU (E.g., bits 11).

According to certain embodiments, the requested information may be included in the response LOAD INFORMATION message by the CU. For instance, in an embodiment, the response LOAD INFORMATION message may include the requested information (e.g., BABS Information) corresponding to each of the DUs. To allow such, the following information may be needed: gNB-DU ID for each IE that is being piggybacked (e.g., for BABS Information), gNB-DU numerology per each IE (e.g., BABS Information), and/or point A of involved DUs so that all DUs become aware of each other's reference resource blocks. The gNB-DU numerology per each IE allows for knowledge of the number of slots per subframe (and thus the muting granularity). If a DU has multiple active numerologies, then a numerology may be indicated per each type of information that the CU sends. This is an optional field since, in the IEs according to certain embodiments, the used numerology can be inferred implicitly by the sizes of the matrices.

It should be noted that reference to a "LOAD INFORMATION" message, as used herein, is just one example. Certain embodiments discussed above may be applicable to any ICIC message defined in the F1 interface, and which would involve a message from a DU requesting information from a CU and a response message by the CU that piggybacks information from multiple DUs back to the requesting DU.

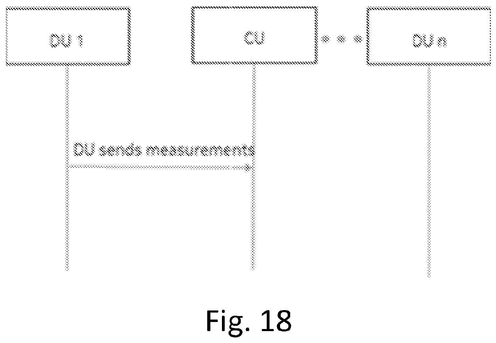

Fig. 18 illustrates an example of a signaling diagram for procedures initiated by DU(s), according to one embodiment. As illustrated in the example of Fig. 18, a DU may make measurement(s) related to ICIC. The DU may feedback to CU (periodically or not) the local measurements available at the DU. Such measurements may include, for example, BOI information.

An embodiment may provide a handshake procedure for eBCoMP. In this embodiment, a scheme is provided for eBCoMP that can operate in the CU-DU split of the F1 interface. Additionally, this embodiment may consider multiple-numerologies and may operate on such in a unified fashion. In a first step, CU may identify the group of DUs that should participate in the eBCoMP. In one example, a DU can send a LOAD INFORMATION (Invoke, eBCoMP) message to the CU to indicate the desire or need to participate to the eBCoMP. In case the DU operates on multiple numerologies, it can indicate through the invoke procedure its preferred numerology. In a second step, the CU may signal the DUs to participate the eBCoMP. In this step, the CU may also signal the numerology that the participating DU should use (in case of multiple numerologies present at the DU). After these steps, a repetitive procedure may be initiated in which the CU sends an eBCoMP IE (e.g., through a LOAD INFORMATION message) which includes muting hypotheses for the DUs. The muting hypotheses may be three dimensional and span time (in terms of slot, mini-slot, or subframe), frequency and spatial domains. As a response, each DU may signal the CU with its benefit metric that corresponds to a given hypothesis. After gathering benefit metrics, the CU can make the best muting in the time, frequency and beam domains for all involved DUs (cells) and signal it to DUs. For example, the best muting may be the muting that has the best overall sum gain. Muting hypotheses signal muting patterns over a set of time-frequency-beam resources of various "time" granularities (slot, mini-slot, subframe) and are associated with a benefit connected to the muting. In one example, CU may reselect the set of DUs that participate the eBCoMP if that further maximizes the overall gain. For instance, a CU may maintain a "gain threshold" and continue running the eBCoMP until this threshold is exceeded. DUs should comply with the resource allocation of the CU.

To be able to provide operation on a slot basis, for example for eBCoMP, certain embodiments may be configured to include a "start slot number" that is the first slot in the radio frame when for example the eBCoMP Information IE is valid. Indicating the slot can be done in several ways. For example, one approach is to use the Start Subframe number (integer from 0 to 9) and a slot number which is a slot within the subframe. For example, in NR, four bits are sufficient to represent the number of slots within a subframe as the maximum number of slots for numerology 4 is 16. In this way, a slot is given hierarchically based on the subframe to which it belongs and the slot number within the subframe (depending on the numerology there can be 1, 2, 4, 8, or 16 slots in a subframe). Alternatively, another approach is to replace the "start subframe number" with a "start slot number" which may be an integer field of 160 (160 slots in a frame at maximum) as an example for the NR case of 4 numerologies. In this way, a slot is given according to its order in the frame.

In addition, in order to provide operation on a mini-slot basis, for example for eBCoMP or for the mini-slot based operation of the schemes described before, certain embodiments may be configured to include a "start mini-slot number" and a "mini-slot duration" (2, 4, or 7) which would indicate the symbol in a slot when the eBCoMP Information IE or the other defined ICIC IEs become valid and how long the mini-slot is going to be. Further, certain embodiments, may add a new field that indicates the granularity with which eBCoMP will be operating. For example, three values can be enough to indicate "subframe-based" eBCoMP, "slot-based" eBCoMP and "mini-slot-based" eBCoMP. This can help maintain backwards subframe-based compatibility, while at the same time provide the slot- and mini-slot-based flexible options.

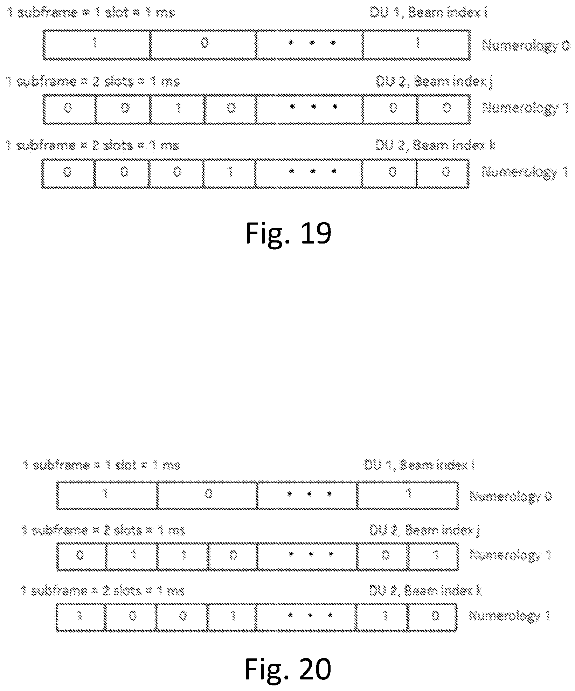

One aspect of certain embodiments is the enablement of operation under multiple numerologies. Figs. 19 and 20 illustrate two examples of BABS involving two DUs, according to some embodiments. In these examples, DU 1 uses numerology 0 and DU 2 uses numerology 1, and it is assumed that DU 1 operates on beam index i while DU 2 on beam indices j and k.

Fig. 19 illustrates an example of BABS information when beam index i interferes with beam indices j and k, according to an embodiment. Thus, on the slots where DU 1 operating on beam index i is not muted, DU 2 is muted when it operates on either beams j or k. When DU 1 operating on beam index i is muted, DU 2 is allowed to be non-muted. In the example of Fig. 19, DU 2 has its third slot non-muted on beam index j and its fourth slot non-muted on beam index k. Alternatively, DU 2 could be non-muted on both slots three and four operating on a single beam index j (or k).

Fig. 20 illustrates a similar configuration as Fig. 19, with the exception that the beams of different DUs are non-interfering. Thus, when DU 1 is not muted on beam index i, DU 2 is allowed to be non-muted also and vice-versa. In the example of Fig. 20, DU 2 is operating on slot 2 under beam index j and on slot 1 on beam index k. Alternatively, it could be operating on a single beam j or k on both slots. It is evident that exploiting multiple numerologies and spatial domain gives extra flexibility in the design of BABS information.

According to some embodiments, when a gNB has different BWPs active in the UL or DL directions it can signal those to a neighbour gNB. In an embodiment, over the Xn interface, BWP UL/DL Information can be added in the LOAD INFORMATION message. In an embodiment, over the F1 interface, BWP UL/DL information can be signaled from a DU to the CU to enable the CU coordinate centrally the best actions for the DUs connected to it.

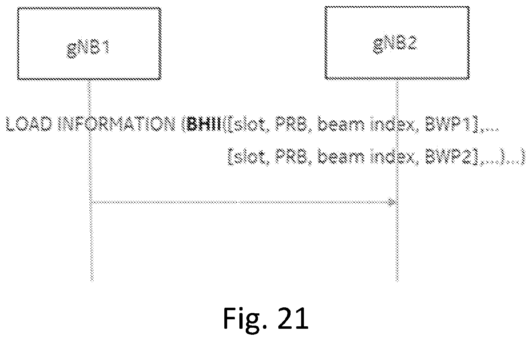

Fig. 21 illustrates an example of a signaling diagram where BWP indication can implicitly signal multi-user MIMO over the Xn interface. In the example of Fig. 21, gNB1 may signal through the Xn interface to gNB2 a BHII on a specific "slot", "beam index", and "PRB" to signal that high interference will be created in the uplink in the specified resources. gNB1 may further signal that it will send two different BWPs, BWP 1 and BWP 2. Thus, the receiving gNB2 knows that if it were to transmit on the same radio and spatial resources it will interfere with multiple users. For this reason, it would be reasonable to refrain from transmitting on those resources. It is noted that the signalling of BWP information to the IEs is optional and may or may not be enabled. This may further be signalled through a bit (for on/off indication).

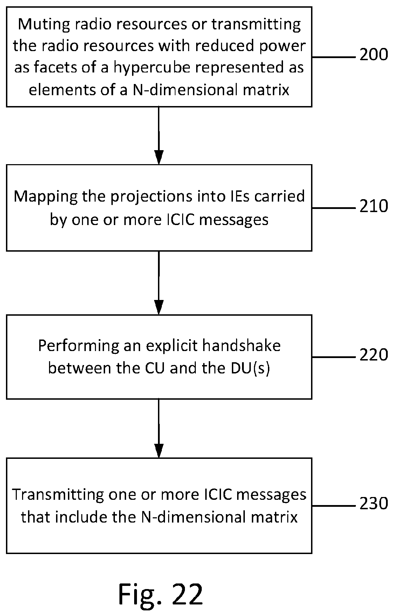

Fig. 22 illustrates an example flow diagram of a method for inter-cell interference coordination, for example in 5G NR, according to one embodiment. In certain example embodiments, the flow diagram of Fig. 22 may be performed by a network node serving a cell, such as a base station, node B, eNB, gNB, or any other access node, or one or more servers in a 5GC or cloud configuration, for instance. In some embodiments, however, the method of Fig. 22 may be performed by a CU and/or DU(s) of a gNB, such as one or more of the CU(s) or DU(s) illustrated in the signaling diagram of Figs. 12-18, for example.

As illustrated in the example of Fig. 22, the method may include, at 200, muting radio resources or transmitting the radio resources with reduced power as facets of a hypercube represented as elements of a N-dimensional matrix. In an example embodiment, projections of the N-dimensional matrix to a lower dimension may contain implicit information about numerology used by neighboring cells. According to one example embodiment, the method may also include, at 210, mapping the projections into IEs carried by one or more ICIC messages.

In an embodiment, the network node performing the method of Fig. 22 may include a CU and one or more DUs. According to some embodiments, the method may then include, at 220, performing an explicit handshake between the CU and the DU(s). In certain embodiments, during the handshake, the method may further include piggybacking information about pertinent neighboring DUs. This information may include, for example, interference information that can be exploited by a scheduler in the DU(s).

According to an embodiment, the method may also include, at 230, transmitting one or more ICIC messages that include the N-dimensional matrix. In certain embodiments, the N-dimensional matrix may be a 2-D or 3-D matrix (or higher) and, therefore, the ICIC message(s) may be defined as 2-D or 3-D matrices or matrices having more dimensions than 3. According to some embodiments, each N-dimensional matrix includes beam information and includes one or more dimensions signifying fractions of frequency and/or time, and may include link directions.

In some embodiments, the transmitting 230 may include transmitting the ICIC messages over an Xn and/or F1 interface. According to one embodiment, one of the dimensions in the N-dimensional matrix may be provided to distinguish between side-links, uplink and downlink directions. As mentioned above, at least the transmitting step 230, the muting or transmitting step 200 may be performed by a CU and/or DU. In this case, the transmitting 230 may include transmitting the ICIC messages over F1 interface.

According to certain embodiments, the transmitting 230 of the ICIC messages may include transmitting one or more of BHII, BRNTP, BOI, BABS, eABS status, and/or eBCoMP. In an embodiment, BHII may include a three-dimensional matrix with dimensions indicating frequency, time (e.g., slot based granularity), and beam index information, respectively. In some embodiments, the dimension of the BHII 3-D matrix may depend on the numerology used and each entry of the matrix (corresponding to a PRB, time slot, and beam index) may take binary values. For example, a value of 1 may signify that high interference will be created in the UL at a given PRB, time (slot) and beam index, and a value of 0 may signify the absence of high interference. In an embodiment, the dimension of the BHII 3-D matrix corresponding to time may be adjusted to reflect the number of slots in a subframe (e.g., 1, 2, 4, 8, 16). Thus, the time dimension of BHII can provide implicit information on the used numerology.

In an embodiment, BRNTP may include a three-dimensional matrix with dimensions indicating frequency, time, and beam index information, respectively. The dimension of the BRNTP 3-D matrix may depends on the numerology used. In an embodiment, each entry of the BRNTP 3-D matrix (corresponding to a PRB, time slot, and beam index) may take binary values or, alternatively, may take quantized Tx information in a sense that a bit in the matrix can indicate the expected values the matrix can take. According to an example, in the binary form, a value 1 may signify that a gNB will transmit at high power in the downlink (exceeding a given threshold) and a value 0 may signify that it will not transmit at a high power. According to another example, in the quantized version, different quantized Tx values may indicate the transmission power of the DU(gNB) at a given frequency, time (slot) and beam index. The dimension of the BRNTP matrix corresponding to time may be adjusted to reflect the number of slots in a subframe (e.g., 1, 2, 4, 8, 16). Thus, the time dimension of BRNTP matrix may provide implicit information on the used numerology. Beam index information may also be alternatively indicated with an index that identifies a set/sector of beams rather than a single beam. For TDD cases, BRNTP can be accompanied with time-domain (timing) information on when a cell will transmit in the DL. This feature can enable neighbouring cells to perform measurements of interference when, for example, neighbouring cells transmit in the DL, and may further enable neighbouring cells to better coordinate their transmissions in time.

In an embodiment, BOI may include a two-dimensional matrix indicating beam index information and a PRB on which interference measurements will take place. In an embodiment, the interference measurement on a PRB may be provided as an average. According to some examples, quantizing the interference can be in terms of low, medium, and high values, or a finer granularity may be defined for more accurate interference measurements. In an embodiment, beam Index information may be indicated with an index that identifies a set/sector of beams rather than a single beam. According to certain embodiments, BOI can be combined with time information regarding when a cell will be performing measurements of interference in the uplink over a certain beam or set of beams.

In an embodiment, BABS may include a two-dimensional matrix indicating time and beam index information. According to one example, at least the time dimension of the BABS may provide implicit information on the numerology used. Similar to the other ICIC messages, the dimension of the BABS matrix may depend on the numerology used. In an embodiment, each entry of the BABS matrix may take binary values. For example, a value of 1 may mean that the gNB will transmit in the DL at the given beam index and slot or mini-slot, and a value of 0 may mean that a given slot or mini-slot is muted for the specified beam index. Depending on the numerology used, the dimension of the BABS matrix that corresponds to time may be adjusted to reflect the number of slots in a subframe (e.g., 1, 2, 4, 8, or 16 slots/subframe) in the case of slot-based resolution. Thus, at least the time dimension of the BABS matrix may provide implicit information on the used numerology.

In an embodiment, eABS status may include a two-dimensional matrix with one dimension indicating time and a second dimension indicating beam index information. As for all the IEs discussed above, the dimension of the eABS status matrix may depend on the numerology used. In an embodiment, each entry of the eABS status matrix may take values between 0 and 100. For example, a value of 100 may mean that a victim gNB2 will use all the resources in terms of beams and slots that an aggressor gNB1 has muted. Depending on the numerology used, the dimension of eABS status matrix corresponding to time may be adjusted to reflect the number of slots in a subframe (e.g., 1, 2, 4, 8, or 16 slots/subframe) in the case of slot-based resolution. Thus, implicit information on the used numerology can be extracted based on the size of the matrix.

In an embodiment, eBCoMP may include a two-dimensional matrix indicating time and beam information, respectively. According to one embodiment, values of the eBCoMP may correspond to a hypothetical muting at a cell. For example, a value of 1 may correspond to muting over the specified time and beam, and a value of 0 may correspond to the absence of muting. The dimension of the eBCoMP matrix that corresponds to time may depend on the numerology used. In other words, in some embodiments, the dimension corresponding to time may be adjusted to reflect the number of slots in a subframe (e.g., 1, 2, 4, 8, or 16 slots/subframe) in the case of slot-based resolution. Thus, the time dimension implicitly signals the numerology used.

In some embodiments, when mini-slot-based resolution is available, the muting 200 may include muting per mini-slot by specifying the starting symbol and the size of the mini-slot within a slot. According to an embodiment, beam index information may also be alternatively indicated with an index that identifies a set or sector of beams rather than a single beam.

According to some embodiments, the method may also include transmitting the ICIC messages along with an element that indicates the BWPs that are currently active in the cell in the UL or DL direction. This enables cells to coordinate their active BWPs so that they can operate concurrently orthogonally if the active BWPs in different cells are non-overlapping. Additionally, in an embodiment, the method may also include signaling the active BWPs per beam in the UL and DL directions.

As discussed above, although not explicitly depicted in the example of Fig. 22, the method may also include any of the steps performed by the CU or DU(s) in Figs. 12-18. For example, in some embodiments, the method may include procedures initiated by the CU, as illustrated in Figs. 12, 13 and 14. Additionally, in some embodiments, the method may include procedures initiated by the DU(s), as illustrated in Figs. 15, 16, 17 and 18.

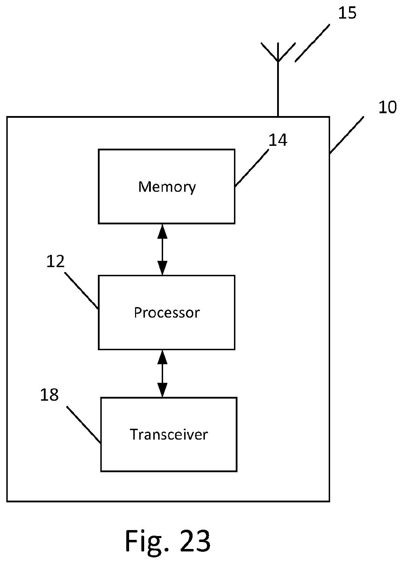

Fig. 23 illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), and/or WLAN access point, associated with a radio access network, such as a LTE network, 5G or NR. In example embodiments, apparatus 10 may be an eNB in LTE or gNB in 5G, for instance.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 23.

As illustrated in the example of Fig. 23, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 23, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like. According to certain embodiments, apparatus 10 may be controlled by memory 14 and processor 12 to perform the functions associated with any of the embodiments described herein, such as the flow or signaling diagrams illustrated in Figs. 12-18 or 21-22. In some embodiments, apparatus 10 may be configured to perform a procedure for unified inter-cell interference coordination for 5G NR, for example.

For instance, in one embodiment, apparatus 10 may be controlled by memory 14 and processor 12 to mute radio resources or transmit the radio resources with reduced power as facets of a hypercube represented as elements of a N-dimensional matrix. In one example embodiment, projections of the N-dimensional matrix to a lower dimension may contain implicit information about numerology used by neighboring cells. According to an example embodiment, apparatus 10 may be controlled by memory 14 and processor 12 to map the projections into IEs carried by one or more ICIC messages.

In an embodiment, as discussed above, apparatus 10 may include a CU and one or more DUs. According to some embodiments, apparatus 10 may be controlled by memory 14 and processor 12 to perform an explicit handshake between the CU and the DU(s). In certain embodiments, apparatus 10 may be controlled by memory 14 and processor 12 to piggyback information about pertinent neighboring DUs during the handshake. This information may include, for instance, interference information that can be exploited by a scheduler in the DU(s).

According to an embodiment, apparatus 10 may be controlled by memory 14 and processor 12 to transmit one or more ICIC messages that include the N-dimensional matrix. In certain embodiments, the N-dimensional matrix may be a 2-D or 3-D matrix (or higher) and, therefore, the ICIC message(s) may be defined to include the 2-D or 3-D matrices or matrices having more dimensions than 3. According to some embodiments, each N-dimensional matrix includes a dimension signifying beam information and includes one or more of a dimension signifying frequency and/or a dimension signifying time.

In some embodiments, apparatus 10 may be controlled by memory 14 and processor 12 to transmit the ICIC message(s) over an Xn and/or F1 interface. According to one embodiment, a dimension may be provided in the N-dimensional matrix to distinguish between side-links, uplink and downlink directions.

According to certain embodiments, apparatus 10 may be controlled by memory 14 and processor 12 to transmit one or more of BHII, BRNTP, BOI, BABS, eABS status, and/or eBCoMP. The details of each of the BHII, BRNTP, BOI, BABS, eABS status, and eBCoMP are discussed above.

In some embodiments, when mini-slot-based resolution is available, apparatus 10 may be controlled by memory 14 and processor 12 to mute per mini-slot by specifying the starting symbol and the size of the mini-slot within a slot. According to an embodiment, beam index information may also be alternatively indicated with an index that identifies a set or sector of beams rather than a single beam.

According to some embodiments, apparatus 10 may be controlled by memory 14 and processor 12 to transmit the ICIC messages along with an element that indicates the BWPs that are currently active in the cell in the UL or DL direction, which may thereby enable cells to coordinate their active BWPs so that they can operate concurrently orthogonally if the active BWPs in different cells are non-overlapping. Additionally, in an embodiment, apparatus 10 may be controlled by memory 14 and processor 12 to signal the active BWPs per beam in the UL and DL directions.

Therefore, certain example embodiments provide several technical improvements, enhancements, and/or advantages. For example, certain embodiments are able to seamlessly capture and extend the existing ICIC mechanisms under a harmonized framework that can be integrated into 3GPP specifications to introduce ICIC capabilities that cover the different 5G NR deployment scenarios.

As such, example embodiments can improve performance, latency, and/or throughput of networks and network nodes including, for example, access points, base stations/eNBs/gNBs, and mobile devices or UEs. Accordingly, the use of certain example embodiments results in improved functioning of communications networks and their nodes.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and include program instructions to perform particular tasks.

A computer program product may comprise one or more computer-executable components which, when the program is run, are configured to carry out some example embodiments. The one or more computer-executable components may be at least one software code or portions of it. Modifications and configurations required for implementing functionality of an example embodiment may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

## Claims

1. A method, comprising:
muting or transmitting with reduced power on radio resources (200), wherein the radio resources are treated as facets of a hypercube represented as elements of an N-dimensional matrix; and
transmitting at least one inter-cell interference coordination message comprising the N-dimensional matrix (230), wherein the N-dimensional matrix comprises a dimension signifying beam information and at least one of a dimension signifying frequency or a dimension signifying time.

2. The method according to claim 1, wherein projections of the N-dimensional matrix to a lower dimension contain implicit information about numerology used by neighboring cells; and wherein the method further comprises mapping the projections into information elements carried by the at least one inter-cell interference coordination message (210).

3. An apparatus, comprising:
means for muting or transmitting with reduced power on radio resources, wherein the radio resources are treated as facets of a hypercube represented as elements of a N-dimensional matrix; and
means for transmitting at least one inter-cell interference coordination message comprising the N-dimensional matrix, wherein the N-dimensional matrix comprises a dimension signifying beam information and at least one of a dimension signifying frequency or a dimension signifying time.

4. The apparatus according to claim 3, wherein the apparatus comprises at least one of: a base station, a centralized unit, or a distributed unit.

5. The apparatus according to claims 3 or 4, wherein projections of the N-dimensional matrix to a lower dimension contain implicit information about numerology used by neighboring cells; and wherein the apparatus further comprising:
means for mapping the projections into information elements carried by the at least one inter-cell interference coordination message.

6. The apparatus according to any of claims 3-5, wherein the means for transmitting comprising means for transmitting the at least one inter-cell interference coordination message over at least one of a Xn or F1 interface.

7. The apparatus according to any of claims 3-6, wherein the dimension is provided in the N-dimensional matrix to distinguish between side-links, uplink and downlink directions.

8. The apparatus according to any of claims 3-7, wherein the apparatus comprises a centralized unit and at least one distributed unit, and wherein the apparatus further comprising:
means for performing explicit handshake between the centralized unit and the at least one distributed unit.

9. The apparatus according to claim 8, wherein the apparatus further comprising means for, during the handshake, piggybacking information about pertinent neighboring distributed units, said information comprising interference information that can be exploited by a scheduler in the at least one distributed unit.

10. The apparatus according to claim 9, wherein an invoke information element comprises an indication of whether the piggybacking of information is included during the handshake; wherein the invoke information is sent from the at least one distributed unit to the centralized unit.

11. The apparatus according to any of claims 3-10, wherein the at least one inter-cell interference coordination message comprises at least one of:
beam-based uplink high interference indication comprising a three-dimensional matrix with dimensions indicating frequency, time, and beam index information;
beam-based relative narrowband transmit power information comprising a three-dimensional matrix with dimensions indicating frequency, time, and beam index information;
enhanced beam-based overload indication comprising a two-dimensional matrix indicating beam index information and a physical resource block on which interference measurements will take place;
enhanced beam-based almost blank subframe information comprising a two-dimensional matrix indicating time and beam index information, wherein a dimension of the beam-based almost blank subframe provides implicit information on the numerology used;
enhanced almost blank subframe status comprising a two-dimensional matrix indicating time and beam index information; or
enhanced beam-based coordinated multipoint information comprising a two-dimensional matrix indicating time and beam information, wherein values of the enhanced beam-based coordinated multipoint correspond to a hypothetical muting at a cell.

12. The apparatus according to claim 11, wherein the at least one inter-cell interference coordination message is accompanied by an element that indicates the bandwidth parts that are currently active in the cell in the uplink or downlink direction.

13. The apparatus according to any of claims 3-12,
wherein the dimension of the N-dimensional matrix corresponding to time depends on a numerology used, or
wherein the dimension of the N-dimensional matrix corresponding to time is adjusted to reflect a number of slots in a subframe.

14. The apparatus according to claim 13, wherein, when numerology 0 is used, the time-slot duration is equal to 1 subframe, and wherein, when a different numerology is used, the time-slot duration changes to enable inter-cell interference coordination control of multiple time granularities.

15. The apparatus according to any of claims 3-14, further comprising means for performing muting per mini-slot by specifying a start and size of the mini-slot within a slot, when mini-slot based resolution is available.

## Patentansprüche

1. Verfahren, das Folgendes umfasst:
Stummschalten oder Übertragen mit reduzierter Leistung auf Funkressourcen (200), wobei die Funkressourcen als Facetten eines Hyperkubus behandelt werden, die als Elemente einer N-dimensionalen Matrix repräsentiert sind; und
Übertragen von mindestens einer Interzellinterferenzkoordinationsnachricht, die die N-dimensionale Matrix (230) umfasst, wobei die N-dimensionale Matrix eine Dimension, die Strahlinformationen kennzeichnet, und mindestens eine von einer Dimension, die eine Frequenz kennzeichnet, oder einer Dimension, die eine Zeit kennzeichnet, umfasst.

2. Verfahren nach Anspruch 1, wobei Projektionen der N-dimensionalen Matrix zu einer niedrigeren Dimension implizite Informationen über eine Numerologie enthalten, die von Nachbarzellen verwendet wird; und wobei das Verfahren ferner das Zuordnen der Projektionen zu Informationselementen umfasst, die von der mindestens einen Interzellinterferenzkoordinationsnachricht (210) transportiert werden.

3. Einrichtung, die Folgendes umfasst:
Mittel zum Stummschalten oder Übertragen mit reduzierter Leistung auf Funkressourcen, wobei die Funkressourcen als Facetten eines Hyperkubus behandelt werden, die als Elemente einer N-dimensionalen Matrix repräsentiert sind; und
Mittel zum Übertragen von mindestens einer Interzellinterferenzkoordinationsnachricht, die die N-dimensionale Matrix umfasst, wobei die N-dimensionale Matrix eine Dimension, die Strahlinformationen kennzeichnet, und mindestens eine von einer Dimension, die eine Frequenz kennzeichnet, oder einer Dimension, die eine Zeit kennzeichnet, umfasst.

4. Einrichtung nach Anspruch 3, wobei die Einrichtung mindestens eines von Folgendem umfasst: einer Basisstation, einer zentralisierten Einheit oder einer verteilten Einheit.

5. Einrichtung nach einem der Ansprüche 3 oder 4, wobei Projektionen der N-dimensionalen Matrix zu einer niedrigeren Dimension implizite Informationen über eine Numerologie enthalten, die von Nachbarzellen verwendet wird; und wobei die Einrichtung ferner Folgendes umfasst:
Mittel zum Zuordnen der Projektionen zu Informationselementen, die von der mindestens einen Interzellinterferenzkoordinationsnachricht transportiert werden.

6. Einrichtung nach einem der Ansprüche 3 bis 5, wobei die Mittel zum Übertragen Mittel zum Übertragen der mindestens einen Interzellinterferenzkoordinationsnachricht über mindestens eines von einer Xn- oder einer F1-Schnittstelle umfassen.

7. Einrichtung nach einem der Ansprüche 3 bis 6, wobei die Dimension in der N-dimensionalen Matrix bereitgestellt wird, um zwischen Sidelinks, Uplink- und Downlinkrichtungen zu unterscheiden.

8. Einrichtung nach einem der Ansprüche 3 bis 7, wobei die Einrichtung eine zentralisierte Einheit und mindestens eine verteilte Einheit umfasst, und wobei die Einrichtung ferner Folgendes umfasst:
Mittel zum Durchführen eines expliziten Handshakes zwischen der zentralisierten Einheit und der mindestens einen verteilten Einheit.

9. Einrichtung nach Anspruch 8, wobei die Einrichtung ferner Mittel zum Aufsetzen von Informationen über zugehörige benachbarte verteilte Einheiten während des Handshakes umfasst, wobei die Informationen Interferenzinformationen umfassen, die von einem Planer in der mindestens einen verteilten Einheit genutzt werden können.

10. Einrichtung nach Anspruch 9, wobei ein Aufrufinformationselement eine Anzeige dazu umfasst, ob das Aufsetzen von Informationen während des Handshakes beinhaltet ist; wobei die Aufrufinformationen von der mindestens einen verteilten Einheit an die zentralisierte Einheit gesendet werden.

11. Einrichtung nach einem der Ansprüche 3 bis 10, wobei die mindestens eine Interzellinterferenzkoordinationsnachricht mindestens eines von Folgendem umfasst:
einer Anzeige einer strahlbasierten hohen Uplinkinterferenz, die eine dreidimensionale Matrix mit Dimensionen umfasst, die Informationen zu Frequenz, Zeit und Strahlindex anzeigen;
Informationen zu einer strahlbasierten relativen Schmalbandübertragungsleistung, die eine dreidimensionale Matrix mit Dimensionen umfassen, die Informationen zu Frequenz, Zeit und Strahlindex anzeigen;
einer Anzeige zu einer verbesserten strahlbasierten Überlastung, die eine zweidimensionale Matrix umfasst, die Strahlindexinformationen, und einen physischen Ressourcenblock, auf dem Interferenzmessungen erfolgen, anzeigt;
Informationen zu einem verbesserten strahlbasierten nahezu leeren Unterframe, die eine zweidimensionale Matrix umfassen, die Zeit- und Strahlindexinformationen anzeigt, wobei eine Dimension des strahlbasierten nahezu leeren Unterframes implizite Informationen über die verwendete Numerologie bereitstellt;
einen verbesserten nahezu leeren Unterframestatus, der eine zweidimensionale Matrix umfasst, die Zeit- und Strahlindexinformationen anzeigt; oder
Informationen zu einem verbesserten strahlbasierten koordinierten Mehrpunkt, die eine zweidimensionale Matrix umfassen, die Zeit- und Strahlinformationen anzeigt, wobei Werte des verbesserten strahlbasierten koordinierten Mehrpunkts einem hypothetischen Stummschalten einer Zelle entsprechen.

12. Einrichtung nach Anspruch 11, wobei die mindestens eine Interzellinterferenzkoordinationsnachricht von einem Element begleitet wird, das die Bandbreitenteile anzeigt, die derzeit in der Zelle in der Uplink- oder der Downlinkrichtung aktiv sind.

13. Einrichtung nach einem der Ansprüche 3 bis 12,
wobei die Dimension der N-dimensionalen Matrix, die der Zeit entspricht, von einer verwendeten Numerologie abhängt, oder
wobei die Dimension der N-dimensionalen Matrix, die der Zeit entspricht, angepasst wird, um eine Anzahl von Schlitzen in einem Unterframe zu reflektieren.

14. Einrichtung nach Anspruch 13, wobei, wenn eine Numerologie 0 verwendet wird, die Zeitschlitzdauer gleich 1 Unterframe ist, und wobei, wenn eine andere Numerologie verwendet wird, die Zeitschlitzdauer sich ändert, um eine Interzellinterferenzkoordinationssteuerung von mehreren Zeitgranularitäten zu ermöglichen.

15. Einrichtung nach einem der Ansprüche 3 bis 14, die ferner Mittel zum Durchführen des Stummschaltens pro Minischlitz durch Spezifizieren eines Starts und einer Größe des Minischlitzes in einem Schlitz, wenn eine minischlitzbasierte Auflösung verfügbar ist, umfasst.

## Revendications

1. Procédé, comprenant les étapes suivantes :
mettre en mode silencieux ou transmettre avec une puissance réduite sur des ressources radio (200), dans lequel les ressources radio sont traitées comme des facettes d'un hypercube représenté comme des éléments d'une matrice à N dimensions ; et
transmettre au moins un message de coordination d'interférence intercellulaire comprenant la matrice à N dimensions (230), dans lequel la matrice à N dimensions comprend une dimension signifiant des informations de faisceau et au moins une parmi une dimension signifiant une fréquence ou une dimension signifiant un temps.

2. Procédé selon la revendication 1, dans lequel des projections de la matrice à N dimensions vers une dimension inférieure contiennent des informations implicites sur la numérologie utilisée par des cellules voisines ; et dans lequel le procédé comprend en outre le mappage des projections dans des éléments d'information transportés par l'au moins un message de coordination d'interférence intercellulaire (210).

3. Appareil, comprenant :
des moyens pour mettre en mode silencieux ou transmettre avec une puissance réduite sur des ressources radio, dans lequel les ressources radio sont traitées comme des facettes d'un hypercube représenté comme des éléments d'une matrice à N dimensions ; et
des moyens pour transmettre au moins un message de coordination d'interférence intercellulaire comprenant la matrice à N dimensions, dans lequel la matrice à N dimensions comprend une dimension signifiant des informations de faisceau et au moins une parmi une dimension signifiant une fréquence ou une dimension signifiant un temps.

4. Appareil selon la revendication 3, dans lequel l'appareil comprend au moins une parmi : une station de base, une unité centralisée, ou une unité distribuée.

5. Appareil selon les revendications 3 ou 4, dans lequel des projections de la matrice à N dimensions vers une dimension inférieure contiennent des informations implicites sur la numérologie utilisée par des cellules voisines ; et dans lequel l'appareil comprend en outre :
des moyens pour mapper les projections dans des éléments d'information transportés par l'au moins un message de coordination d'interférence intercellulaire.

6. Appareil selon l'une des revendications 3 à 5, dans lequel les moyens de transmission comprennent des moyens pour transmettre l'au moins un message de coordination d'interférence intercellulaire sur au moins une parmi une interface Xn ou une interface F1.

7. Appareil selon l'une des revendications 3 à 6, dans lequel la dimension est fournie dans la matrice à N dimensions pour distinguer entre les directions de liaisons latérales, de liaison montante et de liaison descendante.

8. Appareil selon l'une des revendications 3 à 7, dans lequel l'appareil comprend une unité centralisée et au moins une unité distribuée, et dans lequel l'appareil comprend en outre :
des moyens pour réaliser une poignée de main explicite entre l'unité centralisée et l'au moins une unité distribuée.

9. Appareil selon la revendication 8, dans lequel l'appareil comprend en outre des moyens pour, pendant la poignée de main, superposer des informations sur des unités distribuées voisines pertinentes, lesdites informations comprenant des informations d'interférence qui peuvent être exploitées par un planificateur dans l'au moins une unité distribuée.

10. Appareil selon la revendication 9, dans lequel un élément d'informations d'invocation comprend une indication précisant si la superposition d'informations est incluse pendant la poignée de main ; dans lequel les informations d'invocation sont envoyées depuis l'au moins une unité distribuée à l'unité centralisée.

11. Appareil selon l'une des revendications 3 à 10, dans lequel l'au moins un message de coordination d'interférence intercellulaire comprend au moins un parmi :
une indication d'interférence élevée de liaison montante basée sur le faisceau comprenant une matrice tridimensionnelle dont les dimensions indiquent des informations de fréquence, de temps et d'indice de faisceau ;
des informations de puissance de transmission à bande étroite relatives basées sur le faisceau comprenant une matrice tridimensionnelle dont les dimensions indiquent des informations de fréquence, de temps et d'indice de faisceau ;
une indication de surcharge basée sur le faisceau améliorée comprenant une matrice bidimensionnelle indiquant des informations d'indice de faisceau et un bloc de ressources physiques sur lequel auront lieu des mesures d'interférence ;
des informations de sous-trame presque vide basée sur le faisceau améliorées comprenant une matrice bidimensionnelle indiquant des informations de temps et d'indice de faisceau, dans lequel une dimension de la sous-trame presque vide basée sur le faisceau fournit des informations implicites sur la numérologie utilisée ;
un statut de sous-trame presque vide amélioré comprenant une matrice bidimensionnelle indiquant des informations de temps et d'indice de faisceau ; ou
des informations multipoint coordonnées basées sur le faisceau améliorées comprenant une matrice bidimensionnelle indiquant des informations de temps et de faisceau, dans lequel des valeurs des multipoints coordonnées basées sur le faisceau améliorées correspondent à une mise en mode silencieux hypothétique au niveau d'une cellule.

12. Appareil selon la revendication 11, dans lequel l'au moins un message de coordination d'interférence intercellulaire est accompagné d'un élément qui indique les parties de bande passante qui sont actuellement actives dans la cellule dans la direction de liaison montante ou de liaison descendante.

13. Appareil selon l'une des revendications 3 à 12,
dans lequel la dimension de la matrice à N dimensions correspondant au temps dépend d'une numérologie utilisée, ou
dans lequel la dimension de la matrice à N dimensions correspondant au temps est ajustée pour refléter un nombre d'intervalles dans une sous-trame.

14. Appareil selon la revendication 13, dans lequel, lorsqu'une numérologie 0 est utilisée, la durée de tranche de temps est égale à 1 sous-trame, et dans lequel, lorsqu'une numérologie différente est utilisée, la durée de tranche de temps change pour permettre un contrôle de coordination d'interférences intercellulaires de multiples granularités temporelles.

15. Appareil selon l'une des revendications 3 à 14, comprenant en outre des moyens pour réaliser la mise en mode silencieux par mini-intervalle en spécifiant un début et une taille du mini-intervalle dans un intervalle, lorsqu'une résolution basée sur mini-intervalle est disponible.
